# EUROPEAN PATENT SPECIFICATION

(11) **EP 3 219 538 B1**
(45) Date of publication and mention of the grant of the patent: **24.04.2019**
(21) Application number: 17160185.9
(22) Date of filing: 09.03.2017
(51) Int. Cl.: B60N 2/64, B60N 2/66, B60N 2/68, B60N 2/70

(54) **VEHICLE SEAT**
FAHRZEUGSITZ
SIÈGE DE VÉHICULE

(30) Priority: 16.03.2016 JP 2016052312
(43) Date of publication of application: 20.09.2017
(73) Proprietor: TOYOTA JIDOSHA KABUSHIKI KAISHA, Toyota-shi, Aichi 471-8571 (JP)
(72) Inventor: GONZALEZ URIBE, Carlos David, TOYOTA-SHI, AICHI, 471-8571 (JP); KATOH, Kohshi, TOYOTA-SHI, AICHI, 471-8571 (JP); SATO, Hikaru, TOYOTA-SHI, AICHI, 471-8571 (JP)
(74) Representative: Intès, Didier Gérard André

(56) References cited:
- US-A1- 2013 076 092

## Description

### CROSS REFERENCE TO RELATED APPLICATIONS

The present application claims the benefit of priority to Japanese Patent Application No. 2016-052312 filed on March 16, 2016 with the Japanese Patent Office, to which the person skilled in the art can refer to when reading the present application.

### BACKGROUND

### Field of the Disclosure

Embodiments of the present application relate to a vehicle seat in which a backrest is partially allowed to kinetically swivel with movement of an occupant

### Discussion of the Related Art

One example of the vehicle seat of this kind is described in US2015/0367756 A1. According to the teachings of US2015/0367756 A1, a rectangular sub-frame of a backrest section includes a pair of left and right side sections extending vertically, and a lower section connecting lower portions of the side sections. The backrest section is suspended from a seatback frame through a suspension section while being allowed to swivel with respect to the seatback frame.

PCT international publication WO 2013/021497 also describes the vehicle seat of this kind. The vehicle seat taught by WO 2013/021497, a seat frame includes a first seat frame attached to a rail so as to be slidable and arranged parallel to a floor of the vehicle, and a second seat frame attached to the first seat frame through a reclining mechanism. A seat backrest is attached to the second seat frame 5 through a thrust bearing so that the seat backrest is allowed to rotate in the roll direction.

In the vehicle seat taught by US2015/0367756 A1, a net member attached to the seatback is formed of flexible and contractible material to be stretched by a longitudinal motion of a back of the occupant, and the lower section of the sub-frame is formed into an inverted U-shape at a level lower than the lumbosacral area of an occupant to allow the occupant to lean against the seatback. The sub-frame is oscillated laterally in accordance with a turning motion of the vehicle or a lateral weight shift of the occupant. However, since the lower section is merely connecting the side sections while being retracted, the sub-frame may be deformed by a diagonal load resulting from the oscillating motion thereof. Such deformation of the sub-frame may be prevented by increasing thicknesses of the side sections and the lower section to enhance strengths of those members. In this case, however, a total weight of the vehicle seat may be increased as a result of such beef-up of the sub-frame. Such increase in the weight of the vehicle seat may be prevented using lightweight material of high rigidity. In this case, a manufacturing cost of the vehicle seat may be increased. In the vehicle seat taught by WO 2013/021497, the seat backrest may also be deformed by a diagonal load resulting from pivotal motion thereof.

### SUMMARY

Aspects of the present application have been conceived noting the foregoing technical problems, and it is therefore an object of the present application is to provide a vehicle seat having a swivelable sub-frame with enhanced rigidity.

The present application relates to a vehicle seat in accordance with claim 1. In the following description, the longitudinal direction of the vehicle will be considered as the horizontal direction which goes from the rear of the vehicle to the front of the vehicle, while the vertical direction is perpendicular to this horizontal plane, i.e. from the bottom to the top of the vehicle. In the present description, "rear", "behind", or "front" refer to positions or direction seen with respect to the longitudinal direction. The backward direction is the direction that goes from the front of the vehicle towards the back of the vehicle.

In a non-limiting embodiment, the lateral ends of the reinforcement member may be joined to the lateral members at a plurality of points.

In a non-limiting embodiment, the reinforcement member may be joined to the lateral members at a plurality of points higher than lower ends of the lateral members.

Thus, according to the embodiment of the present application, the lateral members of the sub-frame are connected through the reinforcement member. According to the embodiment, therefore, rigidity of the sub-frame may be enhanced to prevent deformation of the sub-frame swayed with a twisting motion of an occupant. In addition, since the reinforcement member is situated behind the lateral members, a conflict between a lumbar spine of the occupant and the reinforcement member can be prevented to improve comfort.

### BRIEF DESCRIPTION OF THE DRAWINGS

Features, aspects, and advantages of exemplary embodiments of the present disclosure will become better understood with reference to the following description and accompanying drawings, which should not limit the disclosure in any way.
Fig. 1 is a front view of the sub-frame according to a first embodiment;
Fig. 2 is a top view of the sub-frame according to the first embodiment;
Fig. 3 is a side view of the sub-frame according to the first embodiment;
Fig. 4 is a partial side view of the sub-frame according to the first embodiment to which a net member is attached;
Fig. 5 is a front view of the net member attached to the sub-frame according to the first embodiment;
Fig. 6 is a rear view of the net member attached to the sub-frame according to the first embodiment;
Fig. 7 is a front view of the sub-frame according to a second embodiment;
Fig. 8 is a front view of the sub-frame according to a third embodiment;
Fig. 9 is a front view of the sub-frame according to a fourth embodiment;
Fig. 10 is a front view of the sub-frame according to a fifth embodiment;
Fig. 11 is a front view of the sub-frame according to a sixth embodiment; and
Fig. 12 is a front view of the sub-frame according to a seventh embodiment.

### DETAILED DESCRIPTION OF SOME EMBODIMENTS

### First Embodiment

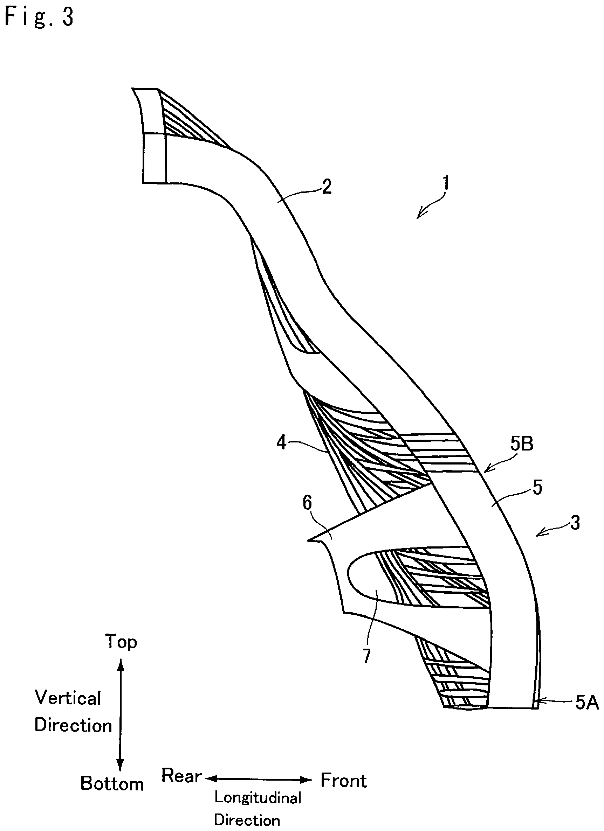

Embodiments of the present application will now be explained with reference to the accompanying drawings. Turning now to Fig. 3, there is shown a side view of a seatback of the vehicle seat according to a first embodiment of the present application. It is to be noted that the vehicle seat according to the present application may be used not only as a driver's seat but also as a front passenger seat. The seatback 1 for supporting an occupant's back comprises a main frame 2 as a fixed frame, and a sub-frame 3 suspended from the main frame 2 in a pivotal manner For example, a swivel-coupling and an outer periphery support (neither of which are shown) described in US2015/0367756 A1 may be used to allow the sub-frame 3 to swivel. Specifically, both right upper corner and left upper corner of the sub-frame 3 are individually connected to the main frame 2 through the outer periphery support taught by US2015/0367756 A1.

In the seatback 1, specifically, the main frame 2 is situated at a level to support a shoulder blade of the occupant, and the sub-frame 3 is situated at a level to support a lumbosacral area of the occupant. As depicted in Fig. 3, the main frame 2 and the sub-frame 3 are curved along the back contour of the occupant from the shoulder to the hips.

A net member 4 of predetermined pattern as a support member is attached to a face of the seatback 1 from the main frame 2 to the sub-frame 3. In order to flexibly support the shoulder blade and the lumbar spine of the occupant, the net member 4 is formed of flexible and contractible warp threads and weft threads. A seat frame (not shown) is connected to the main frame 2 through a recliner mechanism (not shown), and a lower portion of the main frame 2 is slidably engaged with guiderails extending on a floor of a vehicle in a longitudinal direction. In addition, a headrest is attached to an upper portion of the main frame 2 to support a head of the occupant.

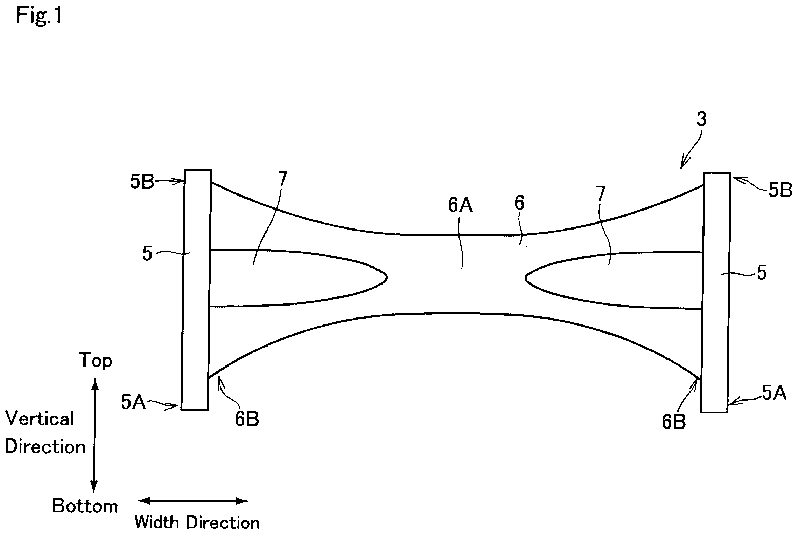

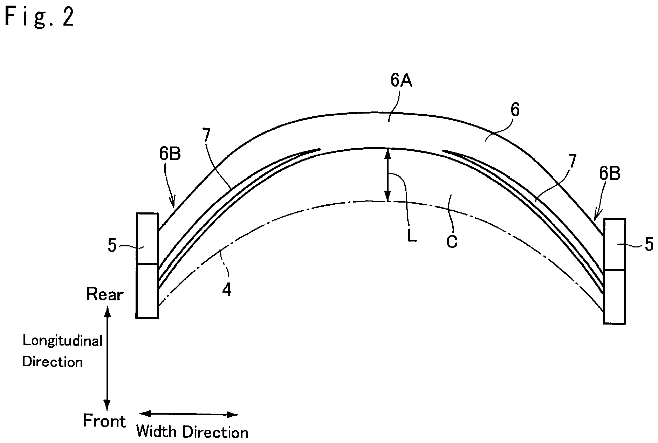

Fig. 1 is a front view of the sub-frame 3 according to the first embodiment, and Fig. 2 is a top view of the sub-frame 3 according to the first embodiment. As illustrated in Figs. 1 and 2, the sub-frame 3 comprises a pair of lateral members 5 extending vertically on both right and left sides, and a reinforcement member 6 connecting the lateral members 5. The lateral members 5 are individually curved in the longitudinal direction of the vehicle along the contour of the lumbar spine of the occupant, and heights of the lateral members 5 are set in such a manner as to support the lumbar spine of the occupant.

As illustrated in Fig. 1, the reinforcement member 6 is a plate member or a band member extending between the lateral members 5, and the reinforcement member 6 is depressed upwardly and downwardly at a center portion 6A. In other words, a width of the reinforcement member 6 is gradually reduced from both right and left end portions 6B toward the center portion 6A. In addition, a semi-elliptical side hole 7 is individually formed from each of the end portion 6B toward the center portion 6A. In the reinforcement member 6 thus shaped into an X-shape, each lower end portions 6B is individually joined to a vicinity of a lower end 5A of the lateral member 5, and each upper end portions 6B is individually joined to a vicinity of an upper end 5B of the lateral member 5. Specifically, each lower end portions 6B of the reinforce member 6 is joined to the lateral member 5 at a portion slightly higher than the lower end 5A. As illustrated in Fig. 2, the center portion 6A of the reinforcement member 6 is curved backwardly to be situated behind the lateral members 5 in a longitudinal direction of the vehicle. That is, a width center portion of the reinforcement member 6 is situated behind the lateral members 5 (with respect to the longitudinal direction of the vehicle).

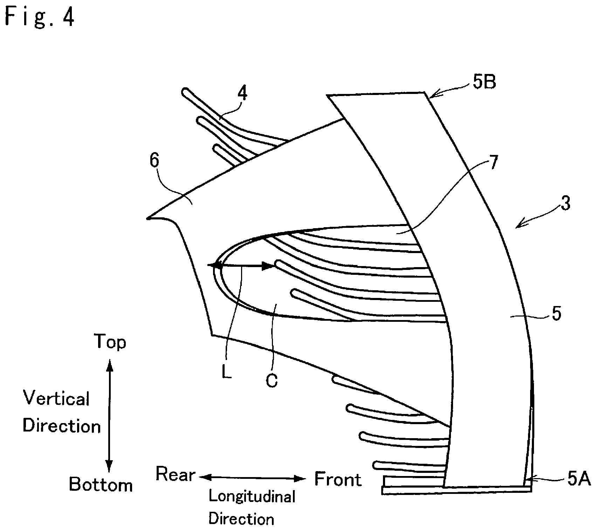

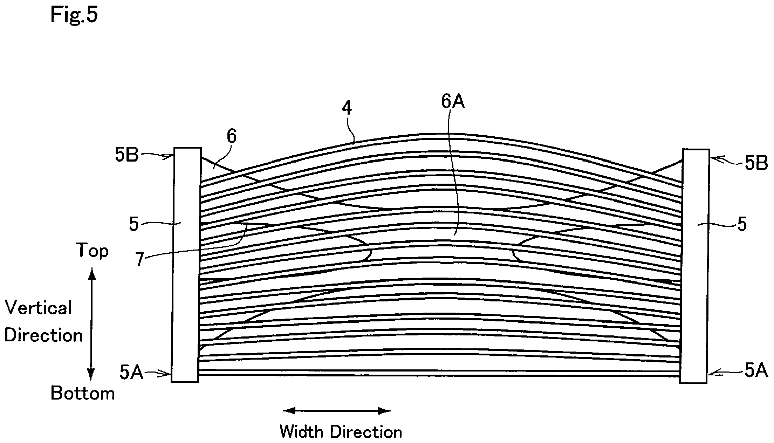

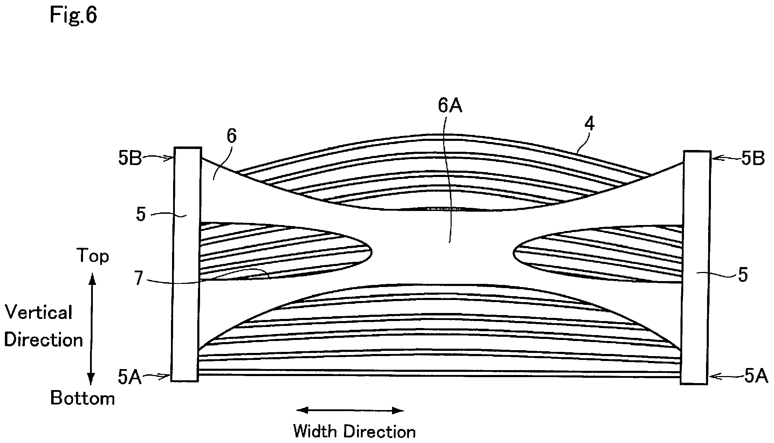

Fig. 4 is an enlarged side view of the sub-frame 3 showing a portion of the net member 4 attached to sub-frame 3, Fig. 5 is a partial front view of the net member 4 attached to sub-frame 3, and Fig. 6 is a partial rear view of the net member 4 attached to sub-frame 3. In Figs. 4 to 6, the warp threads of the net member 4 are omitted for the sake of illustration. As shown in Fig. 4. A predetermined clearance C is maintained between the net member 4 and the reinforcement member 6, and a shortest distance L between the net member 4 and the reinforcement member 6 is determined experimentally in such a manner that the net member 4 pushed backwardly (with respect to the longitudinal direction of the vehicle) by the occupant will not be brought into contact to the reinforcement member 6 even in the event of a rear-end collision.

For example, when a driver sitting on the vehicle seat according to the embodiments turns a steering wheel, a chest of the driver is twisted and the sub-frame 3 is swayed by such twisting motion of the driver. In this situation, the sub-frame 3 is subjected to a deformation load resulting from a weight shift of the driver. However, since the reinforcement member 6 serves as a pair of crossing diagonal beams supporting the lateral members 5 at the lower ends 5A and the upper ends 5B, rigidity or strength of the sub-frame 3 can be enhanced to prevent deformation of the sub-frame 3. In addition, since the rigidity of the lower portion of the sub-frame 3 holding the lumbosacral area of the driver is enhanced, the sub-frame 3 is allowed to swivel accurately in accordance with the twisting motion of the driver.

In addition, since the clearance C is maintained between the net member 4 and the reinforcement member 6, a conflict between the lumbar spine of the occupant and the reinforcement member 6 can be prevented to improve comfort. Further, since the net member 4 will not be brought into contact to the reinforcement member 6 in the event of a rear-end collision, safety of the passenger can be ensured. Furthermore, if a child safety seat is installed on a back seat, the occupant of a front seat can be protected by the reinforcement member 6 from the child safety seat colliding against the reinforcement member 6 from behind in the event of a rear-end collision.

### Second Embodiment

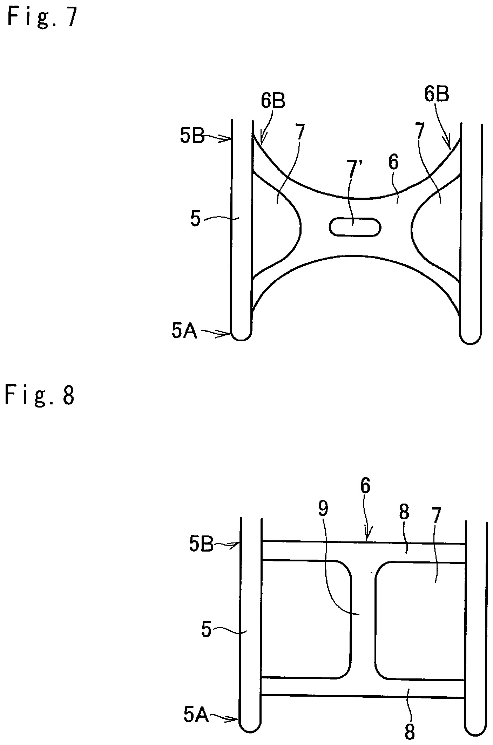

Turning to Fig. 7, there is shown a front view of the sub-frame 3 according to a second embodiment. According to the second embodiment, an elliptical center hole 7' is formed on the center portion 6A of the reinforcement member 6 in addition to the side holes 7. The remaining structures are similar to those of the sub-frame 3 shown in Figs. 1 to 6, and detailed explanations for the common elements will be omitted by allotting common reference numerals thereto. According to the second embodiment, the sub-frame 3 may be further lightened and a manufacturing cost may be reduced in addition to the above-explained advantages of the first embodiment.

### Third Embodiment

Fig. 8 shows a front view of the sub-frame 3 according to a third embodiment. According to the third embodiment, the reinforcement member 6 comprises a pair of horizontal beams 8 extending parallel to each other between the lateral members 5 and a vertical beam 9 connecting center portions of the horizontal beams 8. According the third embodiment, each end portions of the lower horizontal beam 8 is individually joined to the vicinity of the lower end 5A of the lateral member 5, and each end portion of the upper horizontal beam 8 is individually joined to the vicinity of the upper end 5B of the lateral member 5. In this case, each of the side holes 7 is individually enlarged so that the sub-frame 3 may be further lightened and a manufacturing may be further reduced in addition to the above-explained advantages of the foregoing embodiments.

### Fourth Embodiment

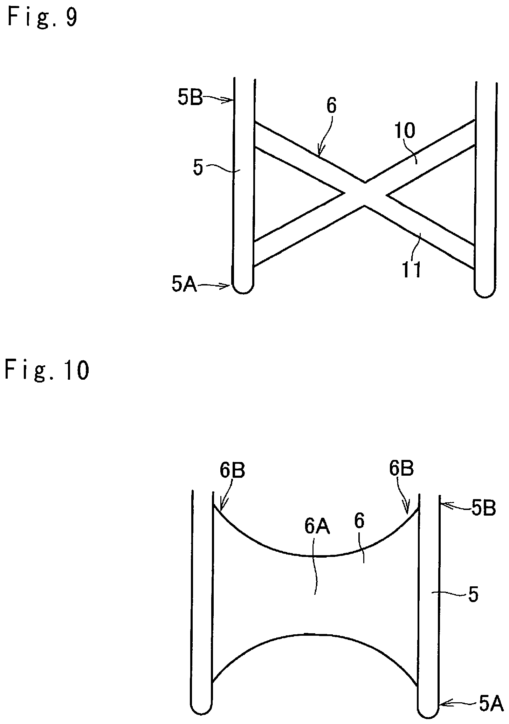

Fig. 9 shows a front view of the sub-frame 3 according to a fourth embodiment. According to the fourth embodiment, the reinforcement member 6 comprises a first diagonal beam 10 extending between the lower end 5A of one of the lateral members 5 and the upper end 5B of the other lateral member 5, and a second diagonal beam 11 extending between the lower end 5A of said other lateral member 5 and the upper end 5B of said one of the lateral members 5. The first diagonal beam 10 and the second diagonal beam 11 may be integrated at an intersection point. In this case, a structure of the sub-frame 3 may be simplified in addition to the above-explained advantages of the foregoing embodiments.

### Fifth Embodiment

Fig. 10 shows a front view of the sub-frame 3 according to a fifth embodiment. According to the fifth embodiment, neither the side holes 7 nor the center hole 7' are formed on the reinforcement member 6, and both right and left end portions 6B of the reinforcement member 6 are joined entirely to the lateral members 5 from the vicinity of the lower end 5A to the vicinity of an upper end 5B. That is, lateral faces of the reinforcement member 6 are totally contacted to the lateral members 5. The center portion 6A of the reinforcement member 6 is also depressed upwardly and downwardly. In other words, a width of the reinforcement member 6 is also gradually reduced from both right and left end portions 6B toward the center portion 6A. According to the fifth embodiment, therefore, rigidity of the sub-frame 3 may be further enhanced to prevent deformation.

### Sixth Embodiment

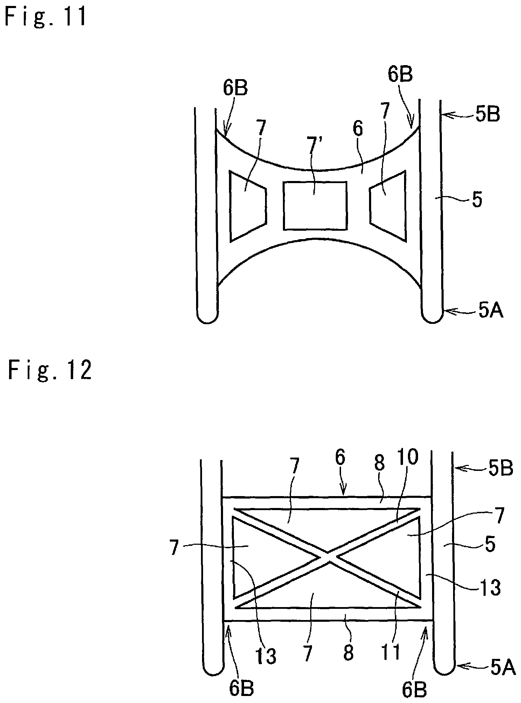

Fig. 11 shows a front view of the sub-frame 3 according to a sixth embodiment. In the reinforcement member 6 according to the sixth embodiment, a rectangular center hole 7' is formed on the center portion 6A, and trapezoidal side holes 7 are formed on both sides of the rectangular center hole 7'. Each trapezoidal side hole 7 comprises two parallel faces and two inclined faces, the shortest of the parallel faces being the closest to the rectangular center hole 7'. According to the sixth embodiment, the reinforcement member 6 may be lightened while reducing a manufacturing cost. In addition, since the right and left end portions 6B of the reinforcement member 6 are also joined entirely to the lateral members 5, rigidity of the sub-frame 3 may also be enhanced to prevent deformation.

### Seventh Embodiment

Fig. 12 shows a front view of the sub-frame 3 according to a seventh embodiment in which the reinforcement member 6 is formed into a rectangular shape. According to the seventh embodiment, the reinforcement member 6 comprises a pair of horizontal beams 8, a pair of vertical beams 13, and a pair of first diagonal beam 10 and second diagonal beam 11. Both right and left end portions 6B of the vertical beams 13 are also joined entirely to the lateral members 5, and upper ends of the vertical beams 13 and lower ends of the vertical beams 13 are connected through the horizontal beams 8 extending parallel to each other. The first diagonal beam 10 extends between the lower end 5A of one of the lateral members 5 and the upper end 5B of the other lateral member 5, and the second diagonal beam 11 extending between the lower end 5A of said other lateral member 5 and the upper end 5B of said one of the lateral members 5. According to the seventh embodiment, therefore, all of the holes 7 may be enlarged so as to further lighten the reinforcement member 6 and to further save a manufacturing cost. In addition, since the right and left end portions 6B of the reinforcement member 6 are also joined entirely to the lateral members 5, rigidity of the sub-frame 3 may also be enhanced to prevent deformation.

In order to lighten the reinforcement member 6 while ensuring rigidity thereof, for example, fiber-glass reinforced plastic, fiber-reinforced composite material or the like may be used to form the reinforcement member 6, and the reinforcement member 6 may be manufactured suitably by an injection moluding method. Specifically, the reinforcement member 6 may be manufactured by setting predetermined fiber material and closing a mould, and thereafter injecting synthetic resin material into the mould.

Although the above exemplary embodiments of the present application have been described, it will be understood by those skilled in the art that the present application should not be limited to the described exemplary embodiments, and various changes and modifications can be made as long as they fall within the scope of the claims.

## Claims

1. A vehicle seat having a seatback (1) including a main frame (2) and a sub-frame (3) suspended from the main frame (2), said sub-frame (3) being configured to be able to swivel with respect to the main frame (2),
**characterized in that**:
a support member (4) is attached to a face of the seatback (1) from the main frame (2) to the sub-frame (3) for supporting a back of an occupant;
the sub-frame (3) is situated at a level to support a lumbosacral area of the occupant, and includes a pair of lateral members (5) extending vertically on both right and left sides of the sub-frame (3), and a reinforcement member (6) connecting the lateral members (5); and
the reinforcement member (6) includes a plate member curved backwardly with respect to the longitudinal direction of the vehicle, and is situated behind the lateral members (5) in a longitudinal direction of the vehicle;
wherein a predetermined clearance (C) is maintained between the support member (4) and the reinforcement member (6).

2. The vehicle seat as claimed in claim 1, wherein both lateral ends of the reinforcement member (6) are joined to the lateral members (5) at a plurality of points.

3. The vehicle seat as claimed in claim 1 or 2,
wherein the reinforcement member (6) is joined to the lateral members (5) at a plurality of points that are higher than lower ends (5A) of the lateral members (5) along a vertical direction of the vehicle.

4. The vehicle seat as claimed in any of claims 1 to 3, wherein the support member (4) is formed of flexible and contractible warp threads and weft threads.

## Patentansprüche

1. Fahrzeugsitz, der eine Sitzlehne (1) aufweist, die einen Hauptrahmen (2) und einen Teilrahmen (3), der an dem Hauptrahmen (2) aufgehängt ist, beinhaltet, wobei der Teilrahmen (3) derart ausgebildet ist, dass er in der Lage ist, bezüglich des Hauptrahmens (2) zu schwenken,
**dadurch gekennzeichnet, dass**:
ein Stützelement (4) an einer Seite der Sitzlehne (1) von dem Hauptrahmen (2) zu dem Teilrahmen (3) zum Stützen eines Rückens eines Insassen befestigt ist,
der Teilrahmen (3) auf einer Ebene liegt, um einen Lendenbereich des Insassen zu stützen, und ein Paar seitlicher Elemente (5), die sich vertikal sowohl auf der rechten als auch der linken Seite des Teilrahmens (3) erstrecken, und ein Verstärkungselement (6), das die seitlichen Elemente (5) verbindet, beinhaltet, und
das Verstärkungselement (6) ein Plattenelement beinhaltet, das bezüglich der Längsrichtung des Fahrzeugs nach hinten gekrümmt ist, und hinter den seitlichen Elementen (5) in einer Längsrichtung des Fahrzeugs liegt,
wobei ein vorbestimmtes Spaltmaß (C) zwischen dem Stützelement (4) und dem Verstärkungselement (6) eingehalten wird.

2. Fahrzeugsitz nach Anspruch 1, wobei beide seitlichen Enden des Verstärkungselements (6) mit den seitlichen Elementen (5) an mehreren Stellen verbunden sind.

3. Fahrzeugsitz nach Anspruch 1 oder 2, wobei das Verstärkungselement (6) mit den seitlichen Elementen (5) an mehreren Stellen, die höher als die unteren Enden (5A) der seitlichen Elemente (5) sind, entlang einer vertikalen Richtung des Fahrzeugs verbunden ist.

4. Fahrzeugsitz nach einem der Ansprüche 1 bis 3, wobei das Stützelement (4) aus biegsamen und zusammenziehbaren Kett- und Schussfäden gebildet ist.

## Revendications

1. Siège de véhicule ayant un dossier de siège (1) comprenant un cadre principal (2) et un cadre secondaire (3) suspendu au cadre principal (2), ledit cadre secondaire (3) étant configuré pour pouvoir pivoter par rapport au cadre principal (2),
**caractérisé en ce que** :
un élément de support (4) est fixé sur une face du dossier de siège (1) depuis le cadre principal (2) jusqu'au cadre secondaire (3) pour supporter un dos d'un occupant ;
le cadre secondaire (3) se trouve à un niveau pour supporter une zone lombo-sacrale de l'occupant, et comprend une paire d'éléments latéraux (5) s'étendant verticalement sur les deux côtés droit et gauche du cadre secondaire (3), et un élément de renfort (6) reliant les éléments latéraux (5) ; et
l'élément de renfort (6) comprend un élément de plaque courbé vers l'arrière par rapport à la direction longitudinale du véhicule, et se trouve derrière les éléments latéraux (5) selon une direction longitudinale du véhicule ;
dans lequel un jeu prédéterminé (C) est maintenu entre l'élément de support (4) et l'élément de renfort (6).

2. Siège de véhicule selon la revendication 1, dans lequel les deux extrémités latérales de l'élément de renfort (6) sont reliées aux éléments latéraux (5) en une pluralité de points.

3. Siège de véhicule selon la revendication 1 ou 2,
dans lequel l'élément de renfort (6) est relié aux éléments latéraux (5) en une pluralité de points qui sont plus hauts que des extrémités inférieures (5A) des éléments latéraux (5) selon une direction verticale du véhicule.

4. Siège de véhicule selon l'une quelconque des revendications 1 à 3, dans lequel l'élément de support (4) est constitué de fils de chaîne et de fils de trame flexibles et pouvant se contracter.
